# EUROPEAN PATENT SPECIFICATION

(11) **EP 2 572 918 B1**
(45) Date of publication and mention of the grant of the patent: **09.09.2015**
(21) Application number: 10851779.8
(22) Date of filing: 21.05.2010
(51) Int. Cl.: B60K 11/04, B62D 35/02, B60K 11/08

(54) **STRUCTURE FOR INTRODUCING COOLING AIR**
EINLASSSTRUKTUR FÜR KÜHLENDE LUFT
STRUCTURE POUR INTRODUCTION D'AIR DE REFROIDISSEMENT

(43) Date of publication of application: 27.03.2013
(73) Proprietor: TOYOTA JIDOSHA KABUSHIKI KAISHA, Toyota-shi, Aichi-ken, 471-8571 (JP)
(72) Inventor: TAJIMA, Masao, Toyota-shi, Aichi-ken, 471-8571 (JP); AJISAKA, Satoshi, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2010/058655
(87) International publication number: WO 2011/145215

(56) References cited:
- DE-A1- 4 102 073
- DE-A1- 4 429 924
- DE-A1- 19 711 336
- JP-A- 5 301 528
- JP-A- 6 024 361
- JP-A- 2000 087 746
- JP-A- 2011 240 827
- JP-U- H01 161 934

## Description

### Technical Field

The present invention relates to a cooling wind introduction structure for guiding cooling wind into a vehicle body from beneath a floor.

### Background Art

There is known a structure that guides cooling wind to an inter-cooler by a duct that is provided at an under cover (see, for example, Japanese Patent Application Laid-Open No. 5-301528). Further, there is known a structure that guides cooling wind from beneath the floor to a radiator that is disposed at a vehicle body rear portion, through a ventilation passage that is tunnel shaped and is formed at a floor panel (see, for example, Japanese Patent Application Laid-Open No. 61-146634).
DE 197 11 336 A1 shows a undercover of a vehicle rear side used to cool an exhaust apparatus and to add downthrust. DE 44 29 924 A1 similarly discloses an undercover of a vehicle to reduce draft and to improve cooling of hot parts of a vehicle.
DE 41 02 073 A1 discloses the features of the preamble of claim 1.

### DISCLOSURE OF INVENTION

### Technical Problem

However, in techniques such as described above, there is the concern that foreign matter that is scattered by the wheels will enter into the vehicle body from an opening portion beneath the floor.

An object of the present invention is to obtain a cooling wind introduction structure that can suppress entry of foreign matter into a vehicle body from an air intake port. Solution to Problem

A cooling wind introduction structure relating to a first aspect of the present invention comprises the features listed in claim 1. Advantageous embodiments are subject of the subclaims.

In accordance with the above-described aspect, air, that is taken-in from the air intake port accompanying traveling of the vehicle, is guided as cooling wind through the duct to (the body to be cooled that is disposed at) the interior of the vehicle body. There are cases in which, accompanying the rotation thereof, (ground-contacting regions of) the wheels scatter foreign matter toward the air intake port that is at the vehicle upper side and vehicle transverse direction inner side (and vehicle rear side). Here, in the present cooling wind introduction structure, the longitudinal direction wall is provided within the duct, and therefore, it is easy for foreign matter, that heads from a wheel toward the interior of the duct with a vector component in the vehicle transverse direction, to hit the longitudinal direction wall. Further, entry of foreign matter, that hits the longitudinal direction wall, into the vehicle body interior through the duct into the vehicle body interior is suppressed.

In this way, in the cooling wind introduction structure of the above-described aspect, entry of foreign matter from the air intake port into the vehicle body can be suppressed. Note that, in a structure in which the opening width, in the vehicle transverse direction, of the duct (the air intake port) is wide, it is desirable to provide plural longitudinal direction walls.

The above-described aspect may be structured such that the longitudinal direction wall is provided so as to be directed toward a vehicle lower side from a ceiling wall that covers the air intake port from a vehicle upper side at the duct.

In accordance with the above-described aspect, the longitudinal direction wall hangs-down toward the air intake port from the ceiling wall that faces the air intake port of the duct, and therefore, entry of foreign matter into the vehicle body from this air intake port can be suppressed even more effectively. Further, the flow of the cooling wind, that heads from the air intake port toward the vehicle body interior, is adjusted by the longitudinal direction wall.

The above-described aspect may be structured such that the duct is formed integrally with an under cover that covers a vehicle from a road surface side.

In accordance with the above-described aspect, because the duct is formed integrally with the under cover, there are few parts and the structure is simple. Further, because no seams or the like are formed at the cooling wind path that the duct forms, adhering of foreign matter is suppressed, and flow resistance decreases.

The invention is structured such that, at the duct, the air intake port is formed at an under cover that covers the vehicle from a road surface side, and the duct is structured to include a shroud that is mounted to the under cover and guides the cooling wind to a body to be cooled, and the longitudinal direction wall is provided at the under cover so as to span between both edge portions, in the vehicle longitudinal direction, of the air intake port.

In accordance with the above-described aspect, the longitudinal direction wall that is provided at the under cover is positioned at the air intake port, i.e., the upstream-most portion of the duct, and therefore, the effect of suppressing entry of foreign matter is strong.

The invention is structured so as to further comprise a vehicle transverse direction wall that is provided at the under cover so as to span between both edge portions, in the vehicle transverse direction, of the air intake port.

In accordance with the above-described aspect, because a vehicle transverse direction wall is further included, it is easy for foreign matter to hit at least one of the vehicle transverse direction wall and the longitudinal direction wall. Therefore, the effect of suppressing entry of foreign matter is strong.

The above-described aspect may be structured so as to be formed in a wing shape that forms an air flow that heads toward a vehicle upper side.

In accordance with the above-described aspect, the wing-shaped vehicle transverse direction wall makes the air flow, that is taken-in from the air intake port, be an air flow that heads upward, and therefore, air flows also to the upper portion of the duct. Due thereto, the amounts of air that flow toward the respective portions of the body to be cooled can be made to be nearly uniform.

### Advantageous Effects of Invention

As described above, the cooling wind introduction structure relating to the present invention has the excellent effect of being able to suppress entry of foreign matter into a vehicle body from an air intake port.

### BRIEF DESCRIPTION OF THE DRAWINGS

Fig. 1 is a side sectional view showing main portions of a cooling wind introduction structure relating to a first embodiment not being part of the present invention.
Fig. 2 is a side sectional view showing a front portion of an automobile to which the cooling wind introduction structure relating to the first embodiment not being part of the present invention is applied.
Fig. 3 is a perspective view seen from beneath an under cover having a duct that structures the cooling wind introduction structure relating to the first embodiment not being part of the present invention.
Fig. 4 is a rear sectional view schematically showing a state of suppressing entry of foreign matter into the duct in accordance with the cooling wind introduction structure relating to the first embodiment not being part of the present invention.
Fig. 5 is a bottom view schematically showing a flow adjusting operation of traveling wind by the cooling wind introduction structure relating to the first embodiment not being part of the present invention.
Fig. 6 is a side sectional view showing main portions of a cooling wind introduction structure relating to an embodiment of the present invention.
Fig. 7 is an exploded perspective view showing a duct portion of the cooling wind introduction structure relating to the embodiment of the present invention.

### BEST MODES FOR CARRYING OUT THE INVENTION

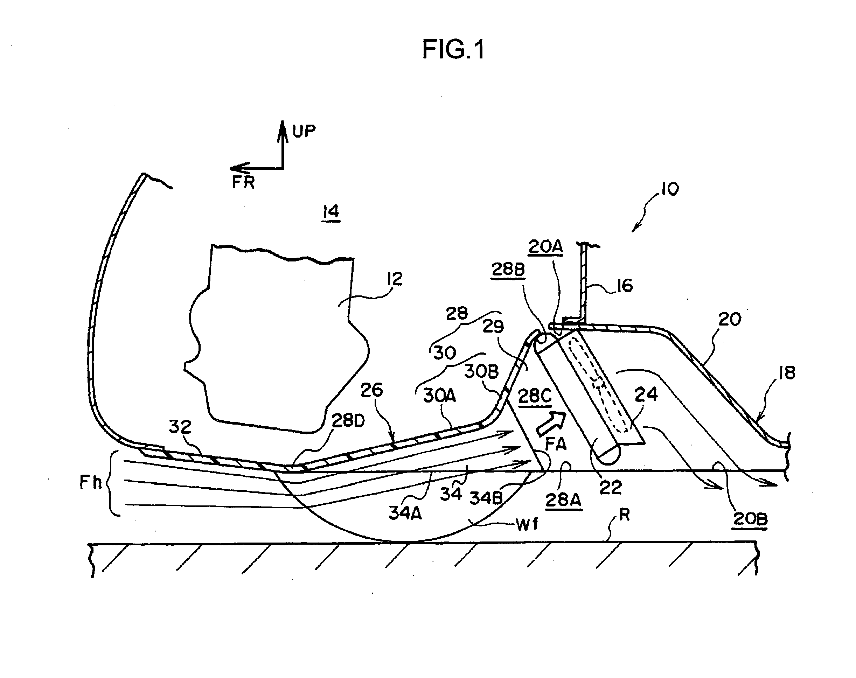

A cooling wind introduction structure 10 relating to a first embodiment not being part of the present invention is described on the basis of Fig. 1 through Fig. 5. First, the structure of a vehicle body 11 of an automobile A, to which the cooling wind introduction structure 10 is applied, is described, and next, the concrete structure of the cooling wind introduction structure 10 is described. Note that arrow FR shown appropriately in the drawings indicates the forward direction in the vehicle longitudinal direction, arrow UP indicates the upward direction in the vehicle vertical direction, and arrow W indicates the vehicle transverse direction, respectively.

### (Schematic Structure of Vehicle Body)

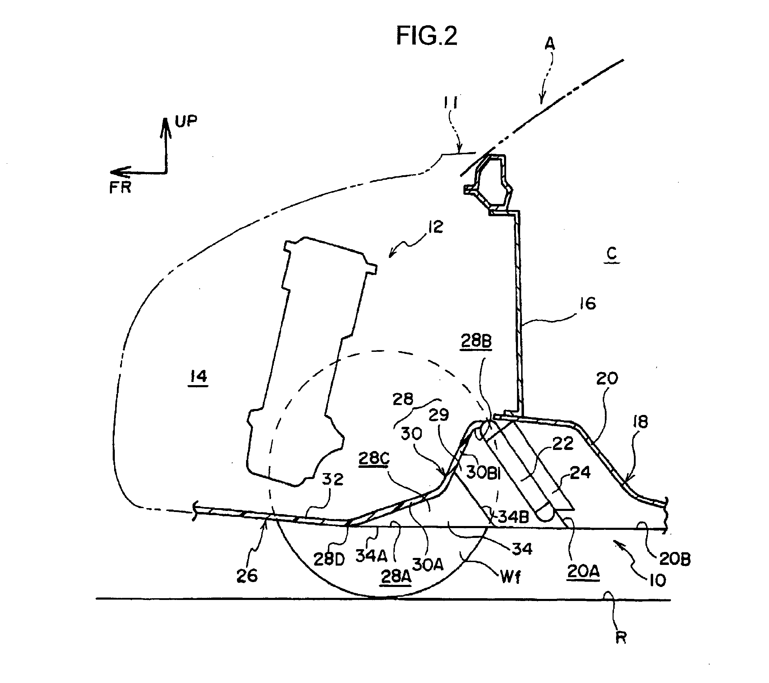

The front portion of the automobile A, to which the cooling wind introduction structure 10 is applied, is shown in Fig. 2 in a schematic side sectional view. As shown in this drawing, a power unit chamber 14, in which a power unit 12 is disposed, is disposed at the front end side in the vehicle longitudinal direction of the automobile A. The power unit 12 in this embodiment is structured to include an engine, that is an internal combustion engine, and an electric motor as drive sources for driving front wheels Wf that are respectively wheels. Accordingly, the automobile A is a hybrid automobile that has two drive sources.

Concretely, the power unit is structured with an engine, that is disposed laterally and has a crank shaft that runs along the vehicle transverse direction, and a transaxle, that is connected to the engine so as to be able to transmit power, as the main portions. The transaxle is structured to include an electric motor, and an unillustrated generator, power dividing mechanism, transmission that is a continuously variable transmission or the like, and the like. Further, in this embodiment, the transaxle is structured to include, for example, an electric motor, a generator, and an inverter that is electrically connected to a battery. Accordingly, the power unit relating to this embodiment can also be interpreted as a power plant.

The power unit chamber 14, in which is disposed the power unit 12 that is structured to include the engine that is an internal combustion engine as described above, can be interpreted as a so-called engine room. The rear end portion in the vehicle longitudinal direction of the power unit chamber 14 is prescribed by a dash panel 16 that separates the power unit chamber 14 and a vehicle cabin C. The dash panel 16 is joined to the front end portion in the vehicle longitudinal direction of a floor panel 18. A floor tunnel 20, that forms a "C" shape that opens downward in the vehicle vertical direction as seen in a front sectional view, is formed at the central portion in the vehicle transverse direction at the floor panel 18.

Further, in the automobile A to which the cooling wind introduction structure 10 is applied, a cooling unit 22 serving as a body to be cooled is provided so as to close-off an opening end 20A at the front side in the vehicle longitudinal direction of the floor tunnel 20. Accordingly, in this embodiment, the cooling unit 22 is disposed at the rear side in the vehicle longitudinal direction with respect to the power unit 12. The cooling unit 22 is structured to include at least one (in the present embodiment, both) of a radiator, that is an air-cooling-type heat exchanger that circulates cooling water between the radiator and (the engine and the electric motor of) the power unit 12 and cools the power unit 12, and a condenser, that is an air-cooling-type heat exchanger that structures (the refrigeration cycle of) an unillustrated air conditioner.

Further, a fan unit 24 is provided at the rear surface side in the vehicle longitudinal direction of the cooling unit 22. Due to operation of this fan unit 24, cooling wind, that carries out heat exchange with cooling water, passes from the front surface side in the vehicle longitudinal direction toward the rear surface side at the cooling unit 22. The cooling wind after carrying out heat exchange with the cooling water is discharged through a downwardly-facing opening end 20B of the floor tunnel 20 to beneath the floor.

The cooling wind introduction structure 10, that is for guiding, to the cooling unit 22, cooling wind that carries out heat exchange with refrigerants (the cooling water circulating through the radiator, the air conditioning refrigerant), is described in detail hereinafter.

### (Structure of Cooling Wind Introduction Structure)

As shown in Fig. 2, the cooling wind introduction structure 10 has an under cover 26 that covers the power unit chamber 14 from the lower side in the vehicle vertical direction. A duct 28, that is for guiding, to the cooling unit 22 (the interior of the floor tunnel 20), traveling wind that flows between the under cover 26 and a road surface R, is formed at the under cover 26. In this embodiment, the entire under cover 26 is formed integrally of a resin material.

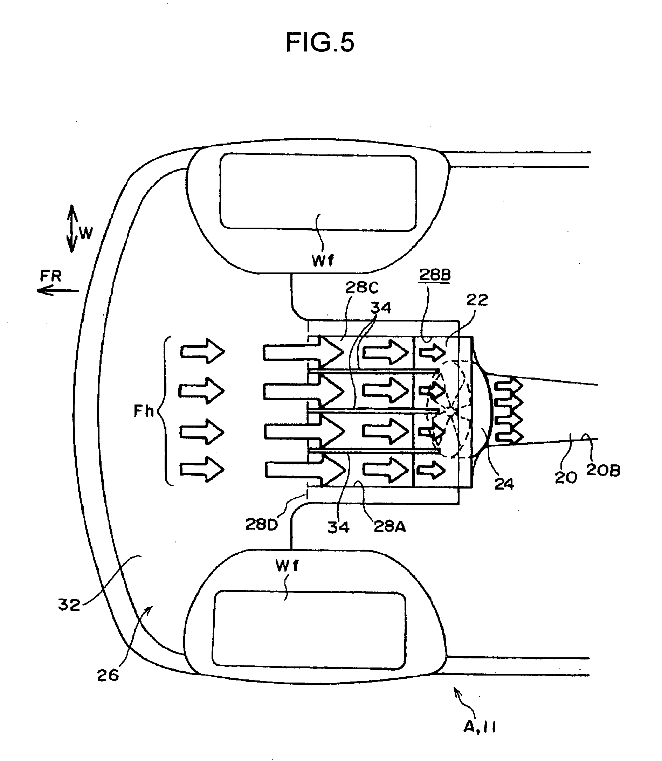

As shown in Fig. 1, the duct 28 has an introduction port 28A, that serves as an air intake port and is an opening portion that opens downward (toward the road surface R side) in the vehicle vertical direction in front, in the vehicle longitudinal direction, of the floor tunnel 20, and a guide-out port 28B, that opens rearward in the vehicle longitudinal direction directly in front, in the vehicle longitudinal direction, of the floor tunnel 20. At the duct 28, the space between the introduction port 28A and the guide-out port 28B is a flow path 28C that is surrounded by a pair of left and right side walls 29 that face one another in the vehicle transverse direction, and a ceiling wall 30 that connects the upper edges in the vehicle vertical direction of the pair of side walls 29. In this embodiment, as shown in Fig. 5, the introduction port 28A is open between the left and right front wheels Wf and at a vehicle rear position with respect to the portion between the left and right front wheels Wf. In other words, the introduction port 28A is open so as to include a portion at the vehicle rear side with respect to the points of contact of the front wheels Wf with the road surface R, i.e., a range in which foreign matter is scattered accompanying rotation of the front wheels Wf.

The above-described cooling unit 22 is interposed in a sealed state between the front side opening end 20A of the floor tunnel 20 and the guide-out port 28B of the duct 28. Namely, the duct 28 (between the automobile A and the road surface R) and the floor tunnel 20 are communicated via (the air side flow path of) the cooling unit 22. Note that the cooling unit 22 may be structured such that a portion thereof or the entirety thereof is disposed at the front portion of the interior of the floor tunnel 20, or may be structured such that a portion thereof or the entirety thereof is disposed at the rear portion of the interior of the duct 28. Namely, it suffices for the cooling unit 22 to be disposed at an intermediate portion of the space (the air flow path) formed by the duct 28 and the floor tunnel 20.

Further, in this embodiment, the cooling unit 22 is disposed at an incline (a forward incline) such that the vehicle upper end side thereof is positioned further toward the vehicle front side than the lower end side. The positions of the rear end in the vehicle longitudinal direction at the introduction port 28A and the lower end in the vehicle vertical direction at the guide-out port 28B substantially coincide with the position of the lower end in the vehicle vertical direction at the cooling unit 22. Due to this arrangement, there is a structure in which cooling wind passes along a direction (see arrow FA shown in Fig. 1) that is substantially orthogonal to the front surface (an inclined direction) of the cooling unit 22, at (the air side flow path of) the cooling unit 22.

Moreover, in this embodiment, a Venturi wall 32 serving as an inclined wall is formed at the vehicle front side of the duct 28 at the under cover 26. The Venturi wall 32 is formed by causing the front side portion, in the vehicle longitudinal direction with respect to a front edge portion 28D of the duct 28 (the introduction port 28A), at the under cover 26 to be inclined such that the rear end side is closer to the road surface R than the front end side in the vehicle longitudinal direction. It suffices for the Venturi wall 32 to be formed, in the vehicle transverse direction, at the front side in the vehicle longitudinal direction of at least the range at which the duct 28 is set, but, in this embodiment, the front portion of the under cover 26 is made to be, over substantially the entire width thereof in the vehicle transverse direction, the Venturi wall 32 that is an inclined wall.

This Venturi wall 32 is a structure that makes the space, that is formed between the Venturi wall 32 and the road surface R, be a Venturi shape in which the vertical width narrows (the cross-section of the flow path is throttled) toward the vehicle rear end side. In this embodiment, the portion, that is substantially directly beneath in the vehicle vertical direction the front edge portion 28D of the duct 28, at this space formed between the Venturi wall 32 and the road surface R is made to be a neck portion at which the cross-section of the flow path is throttled the most. The cooling wind introduction structure 10 that has this Venturi wall 32 is structured such that the traveling wind, that heads toward the vehicle rear, is guided toward the vehicle upper side due to the Venturi effect of the Venturi wall 32 that arises at the vehicle front side of the introduction port 28A, and is easily made to flow into the duct 28 along the above-described arrow FA direction (the traveling wind, before reaching the cooling unit 22, flows into the duct 28 at an angle that is close to the arrow FA direction with respect to the road surface R).

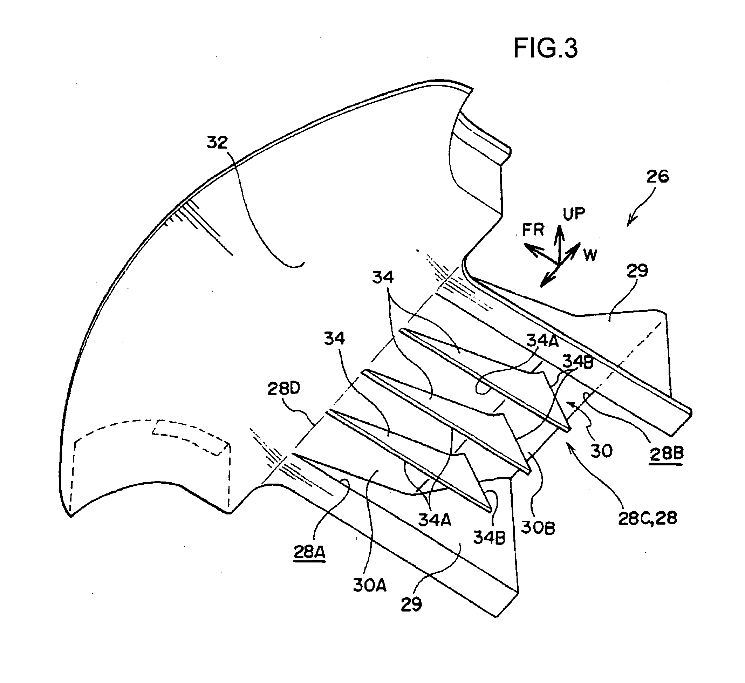

Further, in the cooling wind introduction structure 10, flaps 34 serving as longitudinal direction walls are provided within the duct 28. These flaps 34 are flat walls (flat-plate-shaped members) that extend in the vehicle longitudinal direction and the vehicle vertical direction, and, in this embodiment, the plural flaps 34 are provided so as to be lined-up in the vehicle transverse direction. As shown in Fig. 3, each of the flaps 34 hangs downward from the ceiling wall 30 of the duct 28 toward the introduction port 28A side. As shown in Fig. 1, a bottom edge 34A of each of the flaps 34 forms a rectilinear shape that runs along (is substantially flush with) the plane of opening of the introduction port 28A.

In this embodiment, at the ceiling wall 30, the portion from the front portion thereof to the central portion is made to be a gradually inclined portion 30A having a small angle of inclination with respect to the vehicle longitudinal direction (a horizontal line), and the rear portion thereof is made to be a steeply inclined portion 30B having a large angle of inclination with respect to the vehicle longitudinal direction, and the ceiling wall 30 forms a substantial "V" shape in side sectional view. Note that the shape, as seen in side view, of the ceiling wall 30 is not limited to this, and, for example, the ceiling wall may be formed as a single inclined surface, or, for example, the ceiling wall may be formed by three inclined surfaces. For example, as an aspect in which the ceiling plate is formed by three inclined surfaces, an example can be given of an aspect in which a gradually inclined portion, a steeply inclined portion, and a gradually inclined portion are continuous in that order from the front side in the vehicle longitudinal direction.

Further, due the respective flaps 34 being made to hang-down from the gradually inclined portion 30A of the ceiling wall 30, the respective flaps 34 are positioned from the front portion of the front edge portion 28D to the central portion. Note that rear edges 34B of the respective flaps 34 are inclined so as to be positioned at the vehicle rear side while heading toward the bottom edge 34A sides. Due thereto, the bottom edges 34A reach as far as the introduction port 28A and (the lower ends of) the rear edges 34B are adjacent in the vehicle longitudinal direction to the cooling unit 22, while the flaps 34 are structures in which the amounts thereof that hang-down from the ceiling wall 30 are small.

Further, at the cooling wind introduction structure 10, the fan unit 24 is electrically connected to an unillustrated cooling ECU that serves as a control means. On the basis of a signal from a vehicle speed sensor, the cooling ECU causes the fan unit 24 to operate when the vehicle speed of the automobile A is less than or equal to a predetermined speed and the cooling water temperature is greater than or equal to a predetermined temperature, and stops or prohibits operation of the fan unit 24 when the vehicle speed of the automobile A exceeds a predetermined speed.

Operation of the first embodiment is described next.

In the automobile A to which the cooling wind introduction structure 10 of the above-described structure is applied, at the time of traveling thereof, cooling water circulates through the power unit 12 and the cooling unit 22. This cooling water is cooled by heat exchange with air at the cooling unit 22. Further, at the time of operation of an air conditioner, refrigerant circulates in the order of the cooling unit 22, an expansion valve, an evaporator and a compressor, and a refrigeration cycle is formed. The cooling unit 22 functions as a condenser that cools and condenses the refrigerant by heat exchange with air.

This heat exchange at the cooling unit 22 is carried out by traveling wind of the automobile A, or air flow (cooling wind) that is generated by operation of the fan unit 24, flowing through the air side flow path of the cooling unit 22. Note that, when the cooling ECU judges that the vehicle speed of the automobile A is less than or equal to a predetermined vehicle speed and the cooling water temperature is greater than or equal to a predetermined temperature, the cooling ECU causes the fan unit 24 to operate. Thus, due to the suction force of the fan unit 24, air beneath the floor flows-in through the introduction port 28A into the duct 28 of the automobile A, and this air is guided by the duct 28 to the cooling unit 22.

On the other hand, the cooling ECU, that has judged that the vehicle speed of the automobile A exceeds the predetermined vehicle speed, stops the fan unit 24. Thus, as shown in Fig. 1, traveling wind Fh of the automobile A flows into the duct 28 with a vector component directed toward the upper side of the vehicle, and passes through the cooling unit 22. At this time, the traveling wind Fh is guided toward the upper side of the vehicle due to the Venturi effect generated at the front of the introduction port 28A by the Venturi wall 32, and a large amount of air passes through the introduction port 28A and is introduced into the duct 28.

By the way, while the automobile A is traveling, there are cases in which, when the tires of the front wheels Wf that are rotating step on (sandwich between the tires and the road surface) foreign matter I such as, for example, small stones, sand, mud or the like (hereinafter simply called "foreign matter I"), this foreign matter I is scattered toward the vehicle upper side, toward the vehicle transverse direction inner side, and toward the vehicle rear side. At this time, in a comparative example that does not have the flaps 34, there is the concern that the foreign matter I will enter into the duct 28 and hit the cooling unit 22.

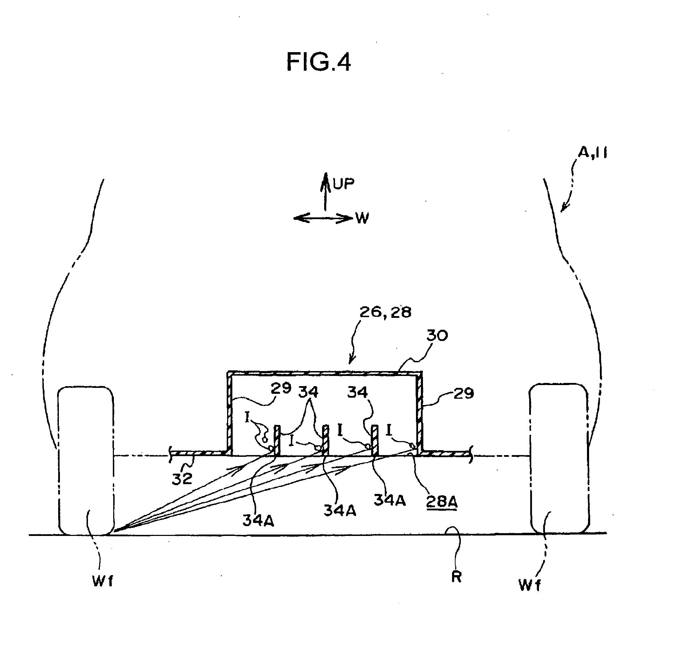

In contrast, in the cooling wind introduction structure 10, because the flaps 34 are provided along the introduction port 28A, the foreign matter I that is scattered by the aforementioned tires hits the flaps 34 as shown in Fig. 4. Therefore, the cooling unit 22 is protected from the foreign matter 1. Namely, the foreign matter I reaching the cooling unit 22 is suppressed due to the flaps 34, and damage or dirtying (performance deterioration) of this cooling unit 22 is prevented or effectively suppressed. Further, because the force with which the foreign matter I hits the flaps 34 is weak, even if the foreign matter I does reach the cooling unit 22, damage to this cooling unit 22 is prevented or effectively suppressed.

Moreover, in the cooling wind introduction structure 10, because the plural flaps 34 are provided so as to be lined-up in the vehicle transverse direction, the effect of suppressing entry of the foreign matter I into the duct 28 (the foreign matter I reaching the cooling unit 22) is strong.

Further, here, in the cooling wind introduction structure 10, because the plural flaps 34 are provided so as to be lined-up in the vehicle transverse direction, a flow adjusting effect of the air flow that is introduced into the duct 28 is obtained. Namely, in a comparative example in which the flaps 34 are not provided, due to separation of the air flow arising at the side walls 29, the air flow concentrates at the duct 28, i.e., the vehicle transverse direction central portion of the cooling unit 22. Therefore, in this comparative example, the cooling effect of the refrigerant by the cooling unit 22 is weak.

In contrast, in the cooling wind introduction structure 10, the flow path is divided into plural sections in the vehicle transverse direction by the flaps 34 at the introduction port 28A of the duct 28 (before separation arises at the side walls 29), and therefore, as shown in Fig. 5, air flows are generated substantially uniformly at the respective flow paths. Note that the sizes of the arrows in Fig. 5 express the flow speeds of the air flows, and, at the respective flow paths that are partitioned by the flaps 34, the flow speed becomes the maximum at the portion throttled by the Venturi wall 32, and on the other hand, the flow speed becomes the minimum downstream of the passage portion of the cooling unit 22, and it can be understood that the air flow rates of the respective flow paths are substantially uniform. In particular, the flow adjusting effect is strong at the time of high-speed traveling of the automobile A, and contributes also to reduction in traveling resistance of the automobile A (an improvement in fuel economy).

Moreover, in the cooling wind introduction structure 10, the duct 28 is formed integrally with the under cover 26. Therefore, there are few parts, and the structure is simple. Further, because no seams or the like are formed at the cooling wind path that the duct 28 forms, adhering of the foreign matter I is suppressed, and there is little flow resistance of the air flow.

### (Second Embodiment)

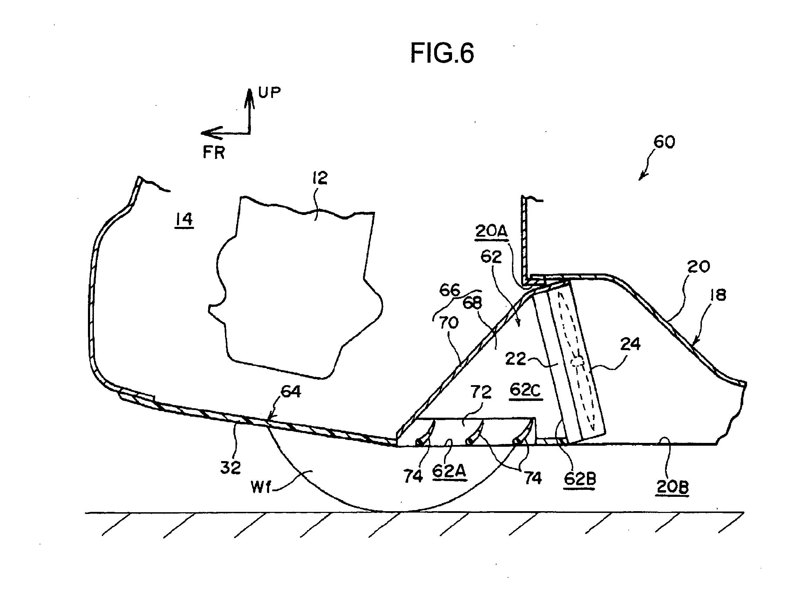

A cooling wind introduction structure 60 relating to the embodiment of the present invention is described on the basis of Fig. 6 through Fig. 7. Note that parts/portions that are substantially the same as structures of the above-described first embodiment are denoted by the same reference numerals as the structures of the above-described first embodiment, and description thereof is omitted.

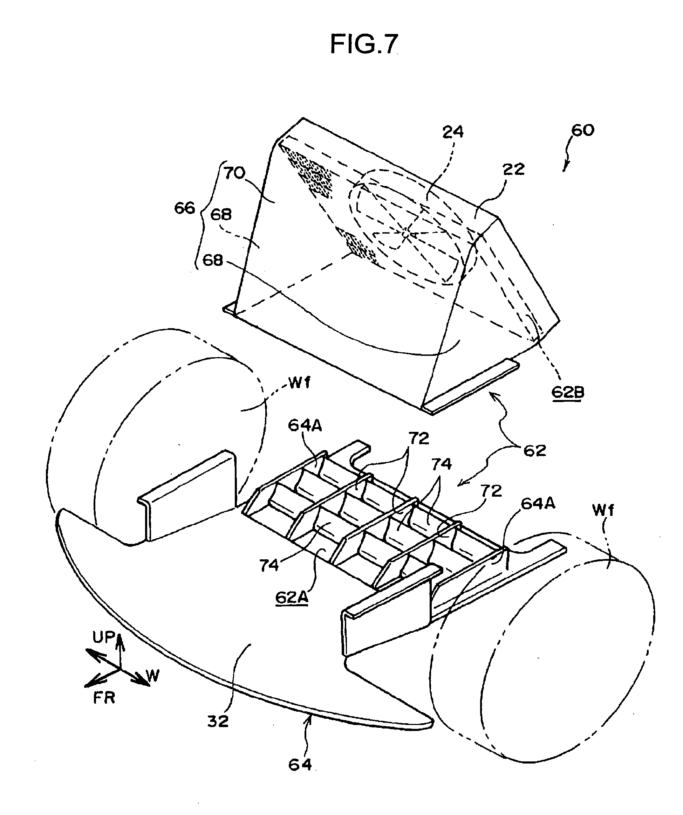

As shown in Fig. 6 and Fig. 7, a duct 62 that structures the cooling wind introduction structure 60 is structured by a shroud 66, that is a member separate from an under cover 64, being combined with the under cover 64. Namely, an introduction port 62A of the duct 62 is formed at the under cover 64 relating to this embodiment. On the other hand, a guide-out port 62B of the duct 62 is formed at the shroud 66. At this duct 62, the space between the introduction port 62A and the guide-out port 62B is made to be a flow path 62C that is surrounded by a pair of left and right side walls 68 that face one another in the vehicle transverse direction, and a ceiling wall 70 that connects the upper edges in the vehicle vertical direction of the pair of side walls 68.

Further, the pair of side walls 68 and the ceiling wall 70 are main portions of the shroud 66. As shown in Fig. 6, the shroud 66 in this embodiment is made into a unit (is made into a module) that can be handled integrally with the cooling unit 22 and the fan unit 24).

A pair of side walls 64A, that are long in the vehicle longitudinal direction, stand toward the upper side of the vehicle from the vehicle transverse direction both edge portions of the introduction port 62A at the under cover 64. The side walls 64A are structured so as to contact, or so as to be positioned as close as possible to, the inner surfaces of the side walls 68 (extend along the inner surfaces of the side walls 68). Flaps 72 serving as longitudinal direction walls are provided between the pair of side walls 64A. The flaps 72 are flat walls (flat-plate-shaped members) that extend in the vehicle longitudinal direction and the vehicle vertical direction, and, in this embodiment, the plural flaps 72 are provided so as to be lined-up in the vehicle transverse direction.

The respective flaps 72 are provided so as to span between the front and rear edge portions of the introduction port 62A. In this embodiment, the pair of side walls 64A are spanned by lateral flaps 74 that serve as vehicle transverse direction walls, and the respective flaps 72 are supported at the lateral flaps 74. Concretely, in the cooling wind introduction structure 60, a plurality (three in this embodiment) of the lateral flaps 74 span between the left and right side walls 64A between the front and rear edges of the introduction port 62A, so as to be separated in the vehicle longitudinal direction. Further, the respective flaps 72 are structures that, in plan view, intersect the respective lateral flaps 74 and form a lattice shape. Due thereto, the respective flaps 72 are supported at the under cover 64 (the side walls 64A) via the lateral flaps 74 as described above.

Further, as shown in Fig. 6, each of the lateral flaps 74 is wing-shaped. Each of the horizontal flaps 74 is formed in a wing shape that forms an air flow that head towards the vehicle upper side within the duct 62. The other structures at the cooling wind introduction structure 60, including portions that are not illustrated, are structured basically similarly to the cooling wind introduction structure 10 relating to the first embodiment.

Accordingly, in accordance with the cooling wind introduction structure 60 relating to the second embodiment as well, effects that are similar can be obtained by operation that is basically similar to the cooling wind introduction structure 10 relating to the first embodiment. Namely, damage or dirtying (performance deterioration) of the cooling unit 22 by the foreign matter I is prevented or effectively suppressed by the flaps 72. Further, at the cooling wind introduction structure 60, because the lateral flaps 74 are provided, even if the foreign matter I such as small stones or the like hits the lateral flaps 74, entry of the foreign matter I into the duct 62 is prevented or effectively suppressed.

Moreover, in the cooling wind introduction structure 60, a flow adjusting effect of the traveling wind is obtained by the lateral flaps 74 as well, and the traveling wind is guided to the respective portions of the cooling unit 22, and therefore, the cooling efficiency by the cooling unit 22 is improved. Namely, the cooling efficiency improves due to the concentration of traveling wind toward the transverse direction and vertical direction central portion of the cooling unit 22 being mitigated and the respective portions of the cooling unit 22 being made to exhibit their performances. Moreover, at the cooling wind introduction structure 60, the lateral flaps 74 are wing-shaped, and therefore, the traveling wind can be guided even to the upper portion of the cooling unit 22, at which it is difficult for traveling wind from beneath the floor of the automobile A to flow in a comparative example that does not have the lateral flaps 74, and this contributes to a further improvement in the cooling efficiency of the cooling unit 22.

Note that the above-described respective embodiments illustrate examples in which the flaps 34, 72 are flat-plate-shaped flat walls, but the present invention is not limited to this. For example, the dimensions and shapes of the flaps 34, 72 may be made to be dimensions and shapes that take aerodynamic characteristics into consideration.

Further, although the above-described respective embodiments illustrate examples in which the Venturi wall 32 is formed at the vehicle front side of the duct 28, 62, the present invention is not limited to this. For example, the under cover 26 at the front of the duct 28 may be formed to be flat (substantially parallel to the road surface R). Moreover, together with the Venturi wall 32 or instead of the Venturi wall 32, an aerodynamic structure that causes the traveling wind Fh to flow into the duct 28 may be provided. For example, a wind guiding member, such as spats or the like that projects-out beneath the floor from the lower end of the cooling unit 22, can be provided as such an aerodynamic structure. Further, this wind guiding member may be made to be, for example, a member whose shape or posture is changed in accordance with the vehicle speed.

Moreover, although the above-described respective embodiments illustrate examples in which the cooling wind introduction structure 10, 60 is applied to between the front wheels Wf, the present invention is not limited to this, and, for example, there may be a structure in which the flaps 34, 72 and the like are provided at a duct that is formed between the rear wheels.

Still further, the above-described respective embodiments illustrate examples in which the power unit 12, that includes an internal combustion engine and a motor, is disposed in the power unit chamber 14 that is positioned in front of the vehicle cabin C, but the present invention is not limited to this. For example, there may be a structure in which the power unit 12 does not include a motor (a general engine vehicle such as a front-wheel drive vehicle, a rear-wheel drive vehicle, a four-wheel drive vehicle, or the like), or there may be a structure in which the power unit 12 that includes an internal combustion engine is disposed in a power unit chamber that is disposed rearward of the vehicle cabin C, or there may be a structure in which the power unit does not include an internal combustion engine.

Further, the above-described respective embodiments illustrate examples in which the power unit 12 is structured to include an electric motor and an unillustrated generator, power dividing mechanism, transmission that is a continuously variable transmission or the like, and the like, but the present invention is not limited to this. For example, a usual transaxle of, for example, a manual transmission (MT), a torque converter type or the like automatic transmission (AT), an continuously variable transmission (CVT) or the like, may be used as the transaxle that structures the power unit 12. These transaxles can also be interpreted as structures that are not included in the power unit 12 (the power unit can be interpreted as a unit that is structured with the main portion thereof being a drive source such as an engine or the like).

## Claims

1. A cooling wind introduction structure (60) comprising:
a duct (62) having an air intake port (62A) that opens toward a road surface between a pair of wheels (Wf) that are lined-up in a vehicle transverse direction or at a vehicle rear side with respect to the pair of wheels(Wf), the duct (62) guiding air, that is taken-in into a vehicle body from the air intake port (62A), as cooling wind further toward the vehicle rear side than the air intake port (62A); and
a plurality of or a single longitudinal direction wall (64A, 72) that is provided within the duct (62) along a vehicle longitudinal direction and a vehicle vertical direction,
wherein at the duct (62), the air intake port (62A) is formed at an under cover (64) that covers the vehicle from a road surface side, and the duct (62) is structured to include a shroud (66) that is mounted to the under cover (64) and guides the cooling wind to a body (22) to be cooled, and
the longitudinal direction wall (64A, 72) is provided at the under cover (64) so as to span between both edge portions, in the vehicle longitudinal direction, of the air intake port (62A), **characterized by**
further comprising a vehicle transverse direction wall (74) that is provided at the under cover (64) so as to span between both edge portions, in the vehicle transverse direction, of the air intake port (62A).

2. The cooling wind introduction structure (60) of claim 1, wherein the longitudinal direction wall (64A, 72) is provided so as to be directed toward a vehicle lower side from a ceiling wall (70) that covers the air intake port (62A) from a vehicle upper side at the duct (62).

3. The cooling wind introduction structure (60) of claim 2, wherein the duct (62) is formed integrally with an under cover (64) that covers a vehicle from a road surface side.

4. The cooling wind introduction structure (60) of claim 1, wherein the vehicle transverse direction wall (74) is formed in a wing shape that forms an air flow that heads toward a vehicle upper side.

## Patentansprüche

1. Einlassstruktur (60) für kühlende Luft, mit:
einer Führung (62), die einen Lufteinlassanschluss (62A) aufweist, der sich hin zu einer Straßenoberfläche zwischen einem Paar von Rädern (Wf), die in einer Fahrzeugquerrichtung hintereinander liegen, oder hinter dem Paar von Rädern (Wf) öffnet, wobei die Führung (62) Luft, die vom Lufteinlassanschluss (62A) in die Fahrzeugkarosserie angesaugt wird, als Kühlluft weiter hin zur Fahrzeugrückseite als den Lufteinlassanschluss (62A) führt; und
eine Vielzahl von Wänden oder eine einzelne Wand (64A, 72) in der Längsrichtung, die innerhalb der Führung (62) in einer Fahrzeuglängsrichtung und in einer Fahrzeughöhenrichtung vorgesehen ist,
wobei an der Führung (62) der Lufteinlassanschluss (62A) an einer Bodenabdeckung (64) gebildet ist, die das Fahrzeug von einer Bodenseite her abdeckt, und die Führung (62) so aufgebaut ist, dass sie eine Verkleidung (66) umfasst, die an der Bodenabdeckung (64) angeordnet ist und den Kühlwind zu einem zu kühlenden Körper (22) führt, und
die Wand (64A, 72) in der Längsrichtung an der unteren Abdeckung (64) so vorgesehen ist, dass sie sich zwischen beiden Kantenabschnitten des Lufteinlassanschlusses (62A) in der Fahrzeuglängsrichtung erstreckt, **dadurch gekennzeichnet, dass** sie weiterhin
eine Wand (74) in der Fahrzeugquerrichtung aufweist, die an der unteren Abdeckung (64) so vorgesehen ist, dass sie sich in der Fahrzeugquerrichtung zwischen den beiden Kantenabschnitten des Lufteinlassanschlusses (62A) erstreckt.

2. Einlassstruktur (60) für kühlende Luft nach Anspruch 1, wobei die Wand (64A, 72) in der Längsrichtung so vorgesehen ist, dass sie von einer Deckenwand (70), die den Lufteinlassanschluss (62A) von einer Fahrzeugoberseite an der Führung (62) abdeckt, hin zu einer Fahrzeugunterseite gerichtet ist.

3. Einlassstruktur (60) für kühlende Luft nach Anspruch 2, wobei die Führung (62) integriert mit einer Bodenabdeckung (64) gebildet ist, die ein Fahrzeug von der Seite einer Straßenoberfläche abdeckt.

4. Einlassstruktur (60) für kühlende Luft nach Anspruch 1, wobei die Wand (74) in der Fahrzeugquerrichtung in einer Flügelform gebildet ist, die einen Luftfluss formt, der zur Fahrzeugoberseite hin gerichtet ist.

## Revendications

1. Structure d'introduction de vent de refroidissement (60)
un conduit (62) comportant un orifice d'admission d'air (62A) qui ouvre vers une surface de route entre une paire de roues (Wf) qui sont alignées dans une direction transversale au véhicule ou au niveau d'un côté arrière de véhicule par rapport à la paire de roues (Wf), le conduit (62) guidant de l'air, qui est admis dans une carrosserie de véhicule depuis l'orifice d'admission d'air (62A), comme vent de refroidissement plus vers le côté arrière de véhicule que l'orifice d'admission d'air (62A) ; et
une pluralité de ou une seule paroi de direction longitudinale (64A, 72) qui est placée dans le conduit (62) le long d'une direction longitudinale de véhicule et d'une direction verticale de véhicule,
dans laquelle au niveau du conduit (62), l'orifice d'admission d'air (62A) est formé au niveau d'un capot inférieur (64) qui couvre le véhicule depuis un côté de surface de route, et le conduit (62) est structuré pour inclure un carénage (66) qui est monté sur le capot inférieur (64) et guide le vent de refroidissement vers un corps (22) à refroidir, et
la paroi de direction longitudinale (64A, 72) est placée au niveau du capot inférieur (64) de façon à enjamber les deux parties de bord, dans le sens de la longueur du véhicule, de l'orifice d'admission d'air (62A), **caractérisée par**
comprenant en outre une paroi dans la direction transversale du véhicule (74) qui est placée au niveau du capot inférieur (64) de façon à enjamber les deux parties de bord, dans la direction transversale du véhicule, de l'orifice d'admission d'air (62A).

2. Structure d'introduction de vent de refroidissement (60) selon la revendication 1, dans laquelle la paroi de direction longitudinale (64A, 72) est placée de façon à être dirigée vers un côté inférieur de véhicule depuis une paroi de plafond (70) qui couvre l'orifice d'admission d'air (62A) depuis un côté supérieur de véhicule au niveau du conduit (62).

3. Structure d'introduction de vent de refroidissement (60) selon la revendication 2, dans laquelle le conduit (62) est formé d'un seul bloc avec un capot inférieur (64) qui couvre un véhicule depuis un côté de surface de route.

4. Structure d'introduction de vent de refroidissement (60) selon la revendication 1, dans laquelle la paroi dans la direction transversale du véhicule (74) est formée en une forme d'aile qui forme un flux d'air qui est dirigé vers un côté supérieur de véhicule.
